# Europäisches Patentamt

## European Patent Office

### Office européen des brevets

(19)

(11) Publication number: **0 091 466**

**B1**

(12) **EUROPEAN PATENT SPECIFICATION**

(45) Date of publication of patent specification: **29.10.86**

(51) Int. Cl.⁴: **H 04 N 7/18,** H 03 K 5/22, G 10 L 7/00

(21) Application number: **82903194.7**

(22) Date of filing: **20.10.82**

(86) International application number: **PCT/SE82/00339**

(87) International publication number: **WO 83/01526 28.04.83 Gazette 83/10**

(54) **Method and apparatus for registering the use of a television receiver in connection with at least one video tape player.**

(30) Priority: **20.10.81 SE 8106186**

(43) Date of publication of application: **19.10.83 Bulletin 83/42**

(45) Publication of the grant of the patent: **29.10.86 Bulletin 86/44**

(84) Designated Contracting States: **AT BE CH DE FR GB LI LU NL SE**

(56) References cited:
DE-A-2 406 485
DE-B-1 197 922
DE-B-2 039 557
DE-B-2 620 059
FR-A-1 509 916
US-A-3 416 080
US-A-3 456 201
US-A-3 639 843

(73) Proprietor: **Robur Vision Industries Ltd. S.A.**
**Ap. 5246**
**Panama 5 (PA)**

(72) Inventor: **Köhler, Hans Olof**
**Odelbergsvägen 23**
**S-121 63 Johanneshov (SE)**
Inventor: **Strömvall, Sten Kenneth**
**Rottnerosbacken 167**
**S-123 48 Farsta (SE)**

(74) Representative: **Hopfgarten, Nils**
**Bergenstrahle & Lindvall AB Sankt Paulsgatan 1**
**S-116 47 Stockholm (SE)**

Courier Press, Leamington Spa, England.

## Description

The present invention relates to a method and an apparatus of registering the use of a television receiver in connection with at least one video tape player, in which method and apparatus an audio signal from the television receiver forms an analysis signal and an audio signal from the video tape player a reference signal, the concordance of said signals being determined by forming smoothed signals or envelopes of the analysis signal and the reference signal and generating a pulse train for each of the smoothed signals or envelopes, which pulse trains represent the analysis signal and the reference signal respectively and are compared with each other at regular intervals.

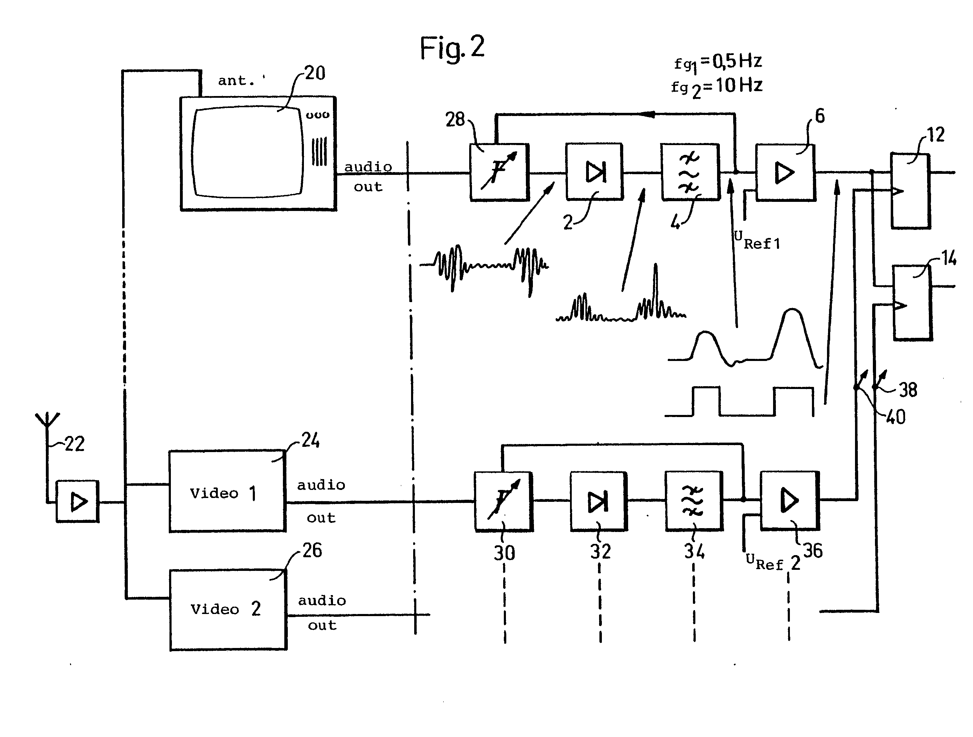

From DE—A—1 197 922 a device is previously known for monitoring pulse sources. This device is a circuit of so called "watch-dog" type and it is disposed to start an alarm, if one of the pulse sources should fail. As an example of application a telephone equipment is described. In this equipment the call signal and the free tone are first integrated and then one of the signals is inverted, before the signals are differentiated and once again rectified so that two pulse trains of desired shape, g and h in Figure 2, are obtained for supply to each input of a bistable flip-flop MV. The flip-flop MV will then oscillate between its two stable positions as long as these control pulses are supplied. However, if one or both of the pulse trains disappear, the flip-flop will stop in one of its positions, the subsequent alarm AL being triggered.

DE—A—2 406 485 discloses a circuit for comparison of frequencies of two pulse trains, a caution signal being delivered if the difference in frequency exceeds a predetermined value. Therefore one of the pulse trains is fed into the input 10 and for each pulse a shift, to the left in the Figure, of information contained in the shift register 20 takes place. To the other input 11 the other pulse train is supplied and for each pulse in this train the information in the shift register 20 is shifted to the right in the figure. If the pulse frequency of the pulse train on the input 10 exceeds the frequency of the pulse train on input 11 more shifts thus take place to the left than to the right in the shift register during a certain period and if the difference in frequency is so large, that in a predetermined time information in the shift register reaches the left end stage the unit 29 is triggered to deliver a caution signal. If instead the frequency of pulse train 11 exceeds the frequency of the pulse train on input 10 so much that the information during a predetermined time is shifted to the right end stage in the shift register 20, the unit 30 will be triggered to deliver the caution signal.

FR—A—1 509 196 describes a method for filtering out the essential information of a vowel signal, disturbed by noise. The method is intended for voice coding systems. The method is based on the principal that the average value of adjacent signal portions are weighted, said weight being a function of the position in the interval, followed by the summation of the weighted periods divided by a given number. After the measurement the measuring interval is displaced with a length which is equal to the length of the average period thus measured. The circuit shown in the figure comprises a non-linear element NLG and a band filter BP for eliminating the basic component in the vowel signal. In the commutation circuit ND the zero passages of the vowel signal are detected and the output signal is supplied to a pulse forming circuit IF. In the units I—IV the different algebraical operations are performed as indicated above.

From US—A—3 456 201 a system for monitoring signal amplitude ranges is known. A given signal is then compared with different thresholds and the proportional durations for the signal being in discrete amplitude ranges are determined.

DE—A—2 620 059 discloses a "watch-dog" circuit too for monitoring digital signals and synchronization signals in a crossing point. The circuit comprises a first register Sp1. To one of its inputs D1 the digital signal is fed and to the other input T1 the synchronization signal is fed. The digital signal to be monitored is read with a synchronization frequency into the register Sp1 by a gate Tor. The gate Tor is blocking as soon as a logic 1 is read into the register Sp1. Thus the register content is no more changed before the end of the monitoring period T0. In the beginning of the next monitoring period the register Sp1 is reset and the gate Tor is opened. The register Sp1 thus delivers an output signal if at least one logic 1 has appeared during the monitoring period. To the register Sp1 is another register Sp2 connected which is also controlled by the monitoring period T0. If however, no logic 1 is read into the register Sp1 during a monitoring period, but the register maintain reset, the second register Sp2 which is scanning the output from the first register Sp1 delivers a signal for triggering an alarm A12. Thus the purpose of the circuit according to this document is to monitor the presence of a signal on the input D1 by a periodic scanning of the input.

The present invention relates to a method and an apparatus for registering the use of a television receiver in connection with at least one video tape player by determining the agreement between an analysis signal delivered by the television receiver and at least one reference signal delivered by a video tape player.

The object of the present invention is to propose a method and provide an apparatus for registering the use of a television receiver in connection with at least one video tape player by monitoring a characteristic audio signal from the television receiver and comparing it with at least one reference signal, delivered by a video tape player.

This object is achieved by a method in accordance with claim 1 and an apparatus in accordance with claim 3.

The invention is suitable for use in monitoring a situation with several video tape players connectable to a television receiver. With the invention it is then possible to determine whether the analysis from the television receiver agrees with one or more given reference signals from the video tape players and in the latter case which one of the reference signals it agrees with.

Thus according to the invention the signals are smoothed and pulse trains corresponding to said smoothed signals or envelopes are generated, a predetermined number of consecutive agreements in the pulse train being required for the analysis signal from the television receiver being considered to agree with a reference signal from a video tape player. This is a safety measure so that the signals will not be registered as being in agreement with randomly coinciding pulses in the corresponding pulse trains.

The method in accordance with the invention can be utilized for comparing a signal from a television receiver with signals from an optional number of video tape players, the apparatus in accordance with the invention being built up with a corresponding number of parallel branches for analysis of the signals and comparison of the analysis signal from a television receiver with each of the given signals from video tape players.

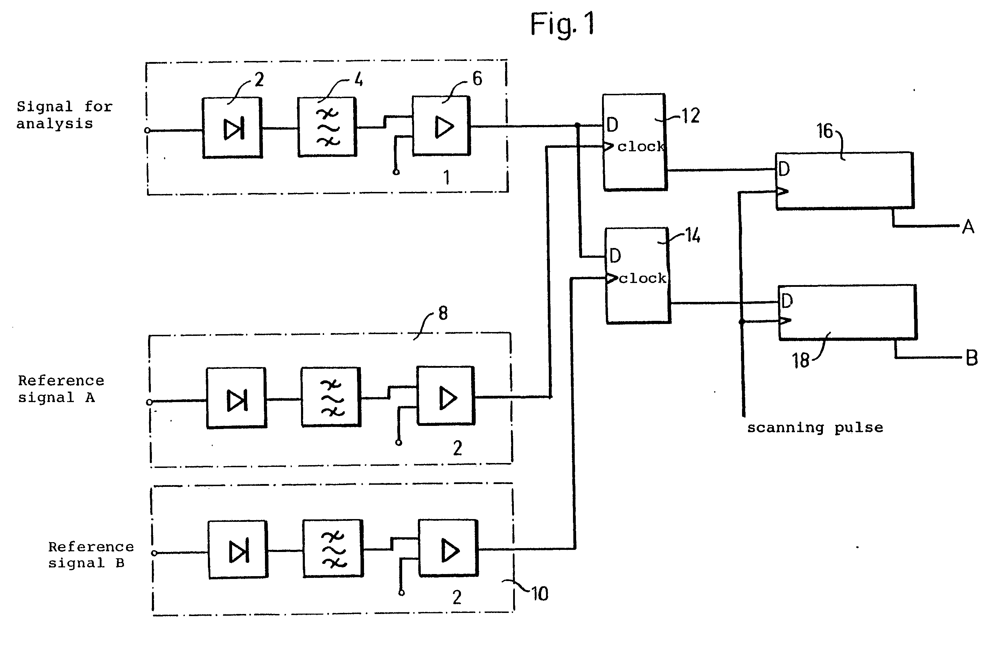

A preferred embodiment of the apparatus in accordance with the invention, selected here as an example, will be described in the following in conjunction with the appended drawings on which Figure 1 is a block diagram illustrating the principles on which the invention is based, and Figure 2 is an example of the use of the apparatus in accordance with the invention for automatic debiting of utilized video service.

To build the smoothed signal or the envelope of the signal which is to be examined it is fed to a rectifier 2 and the rectified output signal is filtered in a bandpass filter 4, the passband of which is between 0,5 and 10 Hz, see Figure 1. It has been found advantageous for the subsequent signal analysis to work within this low-frequency range, inter alia from the noise elimination aspect. The signal DC voltage level is also cut away in the filter 4.

The rectifier 2 comprises two operation amplifiers, diodes and resistances, and the filter 4 is an active filter with operation amplifier.

The signal envelope or smoothed signal obtained from the filter output is applied to one input of a comparator 6. A threshold signal $U_{Ref1}$ is applied to the other input of the comparator 6 to prevent undesired changes of the state of the comparator due to noise. An output pulse is obtained from the comparator when the input signal exceeds the applied threshold signal and the pulse length is determined by the duration of this state.

The comparator 6 is an operation amplifier.

For each of the reference signals A and B in Figure 1 there is a like circuit 8 and 10, respectively, comprising rectifier, bandpass filter and comparator.

The threshold signal $U_{Ref2}$ to the comparators in the reference signal circuits 8, 10 is somewhat higher than the threshold signal $U_{Ref1}$. The output pulses from the comparators in the reference signal circuits 8 and 10 will thus be somewhat narrower than the output pulses from the comparator 6, and the reference signal pulses will be contained within the pulses from the comparator 6.

The output pulse train from the comparator 6 is applied to the data input of two D flip-flops 12, 14. The output pulse train from the reference signal circuits 8 and 10 are applied as clock signals to the flip-flops 12 and 14, respectively. The flip-flops 12, ·14 go to a one state (send an output pulse) for concordant signals. The flip-flops thus have an AND gate function. The flip-flops gate on the flanks from the pulses from the comparators, and by $U_{Ref2}$ being greater than $U_{Ref1}$ the output pulses from the reference signal circuits are, in time, contained within the pulses from the comparator 6, i.e. the signal from the comparator 6 is at the flip-flops 12, 14, when there is applied to these the output pulses from the reference signal circuits 8, 10, the latter pulses also having the character of gate pulses.

The output signals from flip-flops 12 and 14, which thus give information as to the agreement between the pulse trains representing the signal to be examined and the reference signals, are applied to the data input of shift registers 16 and 18, respectively. The registers 16, 18 are scanned at regular intervals by applying a scanning pulse, and at a predetermined number of consecutive, positive answers regarding the concordance of the compared pulse trains said registers 16, 18 trigger a following counter (not shown in Figure 1).

The apparatus of Figure 1 is shown in Figure 2 in use for automatic debiting of utilized video service in a hotel or the like, where the ordinary television programs or one or more available video programs can be connected to the television receivers in the rooms. In such a case the video program utilization shall be debited, but not that of the ordinary TV programs. This is enabled with the present invention in a simple manner without any extra equipment on the television receiver.

The principle forming the basis of the invention here is that speech and music consist of more or less distinct sound packages, e.g. accentuated syllables, individual words, accentuated portions of a beat in music etc., the smoothed signals or envelopes of these sound packages being compared with the smoothed signal or envelope of the reference sound package.

The same units in Figures 1 and 2 have been given the same reference denotations.

A television receiver 20 is connected to an antenna 22 for receiving ordinary television programs, and to two video tape players 24, 26 for receiving programs from them.

An audio signal is taken from the television receiver 20 and fed to a regulating amplifier 28.

The audio signal is suitably taken out before the television receiver volume control via a buffer amplifier to separate the receiver high voltage from the signal taken out.

The signal level is adjusted by means of the regulating amplifier 28 so that a suitable level is applied to the input of the comparator 6. A feedback loop is arranged for this purpose from the comparator input to the amplifier 28. After the amplifier 28 there is the circuit described in connection with Figure 1, comprising the rectifier 2, bandpass filter 4 and comparator 6.

The appearance of the signals after the regulating amplifier 28, after rectifying and after filtering, as well as the output pulse train from the comparator 6 are illustrated in the Figure.

An audio signal is similarly taken out from the video tape players 24, 26. This is obtained by the intermediate-frequency signal being transposed down to the audio range.

The audio signals from the video tape players 24, 26 are treated in the same way as the audio signal from the television receiver 20 in like circuits 30, 32, 34, 36.

As mentioned in conjunction with Figure 1, the threshold signal $U_{Ref2}$ applied to the comparator 36 is higher than the threshold signal $U_{Ref1}$ which is applied to the comparator 6.

As was also mentioned in conjunction with Figure 1, the output signal from the comparator 6 is applied to the flip-flops 12 and 14, and the output signals from the comparator 36 are applied as clock signals to each of the flip-flops 12 and 14.

The video tape players 24, 26 can naturally be connected to several different television sets, and for that reason there is schematically indicated outputs at 38 and 40 for taking the output signals from the comparators 36 to other flip-flops, which are also supplied with the processed audio signal from other television receivers.

After the flip-flops 12 and 14 there are the register and counter as mentioned in conjunction with Figure 1.

In order to ensure that randomly coinciding sound packages do not achieve incorrect registration of concordance, there is required in the apparatus in accordance with the invention a plurality of consecutive, positive answers for agreement between analysis and reference signals to be considered present.

As mentioned above, the registers are scanned at regular intervals. For an automatic system for debiting of the kind mentioned above, the scanning interval for the shift registers can be of the order of magnitude of one minute, and the number of consecutive positive answers for triggering the following counter can be 6 or 7. The shift registers will thus act as a unit for generating a time lag of 6 or 7 minutes before the counter is triggered.

The shift registers 16, 18 are further arranged so that the whole register is zeroed after two consecutive, negative answers regarding the concordance of the compared pulse trains.

The counter can be one of the type used in ordinary telephone conversation counting, and it is triggered at regular intervals, e.g. in the range of 0.1—100 seconds.

In the example described above there is illustrated an embodiment in which two different video tape players (two reference signals) with different programs can be connected to a television receiver, which can also receive the ordinary broadcast television programs. The apparatus can of course in principle be extended for any number of video tape players (reference signals) and for an optional number of television receivers.

**Claims**

1. A method of registering the use of a television receiver in connection with at least one video tape player, in which method an audio signal from the television receiver (20) forms an analysis signal and an audio signal from the video tape player (24 or 26) a reference signal, the concordance of said signals being determined by forming smoothed signals or envelopes of the analysis signal and the reference signal and generating a pulse train for each of the smoothed signals or envelopes, which pulse trains represent the analysis signal and the reference signal respectively and are compared with each other at regular intervals, characterized in that said pulse trains are generated for each of the smoothed signals or envelopes and comprise pulses which have a duration determined by the time for a predetermined polarity of the smoothed signals or envelopes relative a threshold signal, subsequent to which the pulse trains are compared to each other each time a pulse occurs in the reference signal pulse train and the number of simultaneous occurrence of pulses in the two trains in a predetermined number of consecutive comparisons constituting the criterion for the analysis signal and the reference signal being in concordance, thus indicating the connection of the television receiver (20) to at least one video tape player (24, 26).

2. The method as claimed in claim 1, characterized in that the smoothed signals or envelopes are formed by rectifying and bandpass filtering.

3. An apparatus for registering the use of a television receiver in connection with at least one video tape player, in which system an audio signal from the television receiver (20) forms an analysis signal and an audio signal from the video tape player (24 or 26) a reference signal, said system comprising means (2, 4; 32, 4) for forming smoothed signals or envelopes of the analysis signal and the reference signal and a comparator (6, 36) for each signal for comparing the smoothed signals or envelopes with threshold signals for generating an output pulse train in dependence of the comparison, characterized in that the comparators (6, 36) are arranged to generate for each smoothed signal or envelope an output pulse train, consisting of pulses generated at a predetermined polarity of the smoothed signals or envelopes relative to a threshold signal ($U_{ref}$), means (12, 14) being disposed for comparing the pulse trains for each occurrence of a reference signal pulse, and in that registering means (16, 18) are provided to register the number of simultaneous occurrence of pulses in the two trains in a predetermined number of consecutive comparisons as the criterion for the analysis signal and reference signal being in concordance, thus indicating the connection of the television receiver (20) to at least one video tape player (24 or 26).

4. The apparatus as claimed in claim 3, characterized in that the means for forming the smoothed signals or envelopes include, for each signal, a rectifier (2, 32) followed by a bandpass filter (4, 34).

5. The apparatus as claimed in claim 3 or 4, characterized in that the threshold signal ($U_{ref2}$) for the reference signal comparator (36) is higher than the threshold signal ($U_{ref1}$) for the analysis signal comparator (6), the comparators sending output pulses when said smoothed signals or envelopes exceed the respective threshold signals.

6. The apparatus as claimed in any of claims 3—5, characterized in that said comparison means include D-type flip-flops (12, 14), on the data and clock inputs of which pulse trains corresponding to the analysis signal and the reference signal are applied, and in that said registering means include registers (16, 18) to which said flip-flops are sending output signals at simultaneous occurrence of pulses in the applied pulse trains, said registers being adapted for triggering a counter for registering the analysis and reference signals as being in concordance after the registers have received said output signals form the flip-flops in a predetermined number of consecutive comparisons.

7. The apparatus as claimed in any of claims 4—6, characterized in that the passband of the bandpass filter (4, 34) is comprised between 0.5 and 10 Herz.

8. The apparatus as claimed in any of claims 3—7, the analysis signal from a television receiver being intended for comparison with a reference signals from a plurality of video tape players, characterized in that a parallel branch (8—10) including means for forming a smoothed signal or envelope, as well as comparator and registration means are provided for each reference signal.

## Patentansprüche

1. Verfahren zum Registrieren der Benutzung eines Fernsehempfängers in Verbindung mit mindestens einem Videoband-Abspielgerät, bei dem ein Audiosignal von dem Fernsehempfänger (20) ein Analysesignal bildet und ein Audiosignal von dem Videoband-Abspielgerät (24 oder 26) ein Referenzsignal bildet, deren Übereinstimmung durch Bilden geglätteter Signale oder Hüllkurvensignale des Analysesignals und des Referenzsignals und Erzeugen eines Impulszuges für jedes der geglätteten Signale oder Hüllkurvensignale ermittelt wird, wobei die Impulszüge jeweils das Analysesignal und das Referenzsignal darstellen und in regelmäßigen Intervallen miteinander verglichen werden, dadurch gekennzeichnet, daß die Impulszüge für jedes der geglätteten Signale oder Hüllkurvensignale erzeugt werden und Impulse enthalten, deren Dauer durch die Zeit für eine bestimmte Polarität der geglätteten Signale oder Hüllkurvensignale in bezug auf ein Schwellensignal bestimmt ist, wobei die Impulszüge nachfolgend miteinander jedesmal, wenn ein Impuls in dem Referenzsignalimpulszug erscheint, verglichen werden und die Anzahl des gleichzeitigen Auftretens von Impulsen in den beiden Zügen in einer bestimmten Anzahl von aufeinanderfolgenden Vergleichen das Kriterium für die Übereinstimmung des Analysesignals und des Referenzsignals bildet, und so die Verbindung des Fernsehempfängers (20) mit mindestens einem Videoband-Abspielgerät (24, 26) anzeigt wird.

2. Verfahren nach Anspruch 1, dadurch gekennzeichnet, daß die geglätteten Signale oder Hüllkurvensignale durch Gleichrichten und Bandpaß-Filterung gebildet werden.

3. Vorrichtung zur Registrierung der Benutzung eines Fernsehempfängers in Verbindung mit mindestens einem Videoband-Abspielgerät, bei der ein Audiosignal von dem Fernsehempfänger (20) ein Analysesignal bildet und ein Audiosignal von dem Videoband-Abspielgerät (24 oder 26) ein Referenzsignal bildet, mit einer Vorrichtung (2, 4; 32, 4) zum Bilden von geglätteten Signalen oder Hüllkurvensignalen des Analysesignals und des Referenzsignals und einem Komparator (6, 36) für jedes Signal zum Vergleichen der geglätteten Signale oder Hüllkurvensignalen mit Schwellensignalen zur Erzeugung eines Ausgangsimpulszuges in Abhängigkeit von dem Vergleich, dadurch gekennzeichnet, daß die Komparatoren (6, 36) für jedes geglättete Signal oder Hüllkurvensignal einen Ausgangsimpulszug erzeugen, der aus Impulsen besteht, die bei einer bestimmten Polarität des geglätteten Signals oder Hüllkurvensignals relativ zu einem Schwellensignal ($U_{ref}$) erzeugt worden sind, wobei eine Vorrichtung (12, 14) zum Vergleichen der Impulszüge für jedes Auftreten eines Referenzsignalimpulses vorgesehen ist, und daß Registervorrichtungen (16, 18) vorgesehen sind, um die Anzahl von gleichzeitigem Auftreten von Impulsen in beiden Zügen in einer bestimmten Anzahl von aufeinanderfolgenden Vergleichen als Kriterium für die Übereinstimmung von Analysesignal und Referenzsignal registrieren, wodurch die Verbindung des Fernsehempfängers (20) mit mindestens einem Videoband-Abspielgerät (24 oder 26) anzeigt wird.

4. Vorrichtung nach Anspruch 3, dadurch gekennzeichnet, daß die Vorrichtung zum Bilden der geglätteten Signale oder Hüllkurvensignale für jedes Signal einen Gleichrichter (2, 32) beinhaltet, dem ein Bandpaß-Filter (4, 34) nachgeschaltet ist.

5. Vorrichtung nach Anspruch 3 oder 4, dadurch gekennzeichnet, daß das Schwellensignal ($U_{ref2}$) für den Referenzsignalkomparator (36) größer als das Schwellensignal ($U_{ref1}$) für den Analysesignalkomparator (6) ist, wobei die Komparatoren Ausgangsimpulse aussenden, wenn die geglätteten Signale oder Hüllkurvensignale die jeweiligen Schwellensignale übersteigen.

6. Vorrichtung nach einem der Ansprüche 3 bis 5, dadurch gekennzeichnet, daß die Vergleichsvorrichtung D-Flip-Flops (12, 14) aufweist, auf deren Daten- und Takteingänge Impulszüge gegeben werden, die dem Analysesignal und dem Referenzsignal entsprechen, und daß die Registriervorrichtungen Register (16, 18) aufweisen, an die die Flip-Flops bei gleichzeitigem Auftreten von Impulsen in den angelegten Impulszügen Ausgangssignale senden, wobei die Register, nachdem sie von den Flip-Flops die Ausgangssignale in einer bestimmten Anzahl von aufeinanderfolgenden Vergleichen erhalten haben, einen Zähler zur Registrierung der Übereinstimmung von Analyse- und das Referenzsignalen triggern.

7. Vorrichtung nach einem der Ansprüche 4 bis 6, dadurch gekennzeichnet, daß der Durchlaßbereich des Bandpaß-Filters (4, 34) zwischen 0,5 und 10 Hz liegt.

8. Vorrichtung nach einem der Ansprüche 3 bis 7, wobei das Analysesignal von einem Fernsehempfänger zum Vergleichen mit Referenzsignalen von mehreren Videoband-Abspielgeräten bestimmt ist, dadurch gekennzeichnet, daß ein paralleler Zweig (8 bis 10), der eine Vorrichtung zum Bilden eines geglätteten Signales oder Hüllkurvensignals aufweist, sowie ein Komparator und eine Registriervorrichtung für jedes Referenzsignal vorgesehen sind.

## Revendications

1. Procédé d'enregistrement de l'utilisation d'un récepteur de télévision par rapport à au moins un magnétoscope, dans lequel un signal d'audiofréquences provenant du récepteur de télévision (20) forme un signal d'analyse et un signal d'audiofréquences provenant du magnétoscope (24 ou 26) forme un signal de référence, la concordance des signaux étant déterminée par formation de signaux lissés ou d'enveloppes du signal d'analyse et du signal de référence et par création d'un train d'impulsions pour chacun des signaux lissés ou d'enveloppes, ces trains d'impulsions représentant le signal d'analyse et le signal de référence respectivement et étant comparés l'un à l'autre à intervalles réguliers, caractérisé en ce que les trains d'impulsions sont créés pour chacun des signaux lissés ou des enveloppes et comportent des impulsions qui ont une durée déterminée par le temps pendant lequel les signaux lissés ou les enveloppes ont une polarité prédéterminée par rapport à un signal de seuil, puis les trains d'impulsions sont comparés les uns aux autres chaque fois qu'une impulsion apparaît dans le train d'impulsions du signal de référence et le nombre d'apparitions simultanées d'impulsions dans les deux trains, un nombre prédéterminé de comparaisons successives, constituant le critère pour la concordance du signal d'analyse et du signal de référence, indiquant ainsi la connexion du récepteur de télévision (20) à au moins un magnétoscope (24, 26).

2. Procédé selon la revendication 1, caractérisé en ce que les signaux lissés ou les enveloppes sont formés par redressement et filtrage dans une bande passante.

3. Appareil d'enregistrement de l'utilisation d'un récepteur de télévision par rapport à au moins un magnétoscope, dans lequel un signal d'audiofréquences provenant d'un récepteur de télévision (20) forme un signal d'analyse et un signal d'audiofréquences provenant du magnétoscope (24 ou 26) forme un signal de référence, l'appareil comprenant un dispositif (2, 4; 32, 4) destiné à former des signaux lissés ou des enveloppes du signal d'analyse et du signal de référence, et un comparateur (6, 36) pour chaque signal, destiné à comparer les signaux lissés ou les enveloppes à des signaux de seuil et à créer un train d'impulsions de sortie suivant la comparaison, caractérisé en ce que les comparateurs (6, 36) sont disposés afin qu'ils créent, pour chaque signal lissé ou chaque enveloppe, un train d'impulsions de sortie constitué d'impulsions créées à une polarité prédéterminée des signaux lissés ou des enveloppes par rapport à un signal de seuil ($U_{ref}$), un dispositif (12, 14) étant disposé afin qu'il compare les trains d'impulsions à chaque apparition d'une impulsion du signal de référence, et en ce qu'un dispositif d'enregistrement (16, 18) est destiné à enregistrer le nombre d'apparitions simultanées d'impulsions dans les deux trains dans un nombre prédéterminé de comparaisons consécutives, comme critère de concordance du signal d'analyse et du signal de référence, indiquant ainsi la connexion du récepteur de télévision (20) à au moins un magnétoscope (24 ou 26).

4. Appareil selon la revendication 3, caractérisé en ce que le dispositif destiné à former les signaux lissés ou les enveloppes comportent, pour chaque signal, un redresseur (2, 32) suivi par un filtre passe-bande (4, 34).

5. Appareil selon l'une des revendications 3 et 4, caractérisé en ce que le signal de seuil ($U_{ref2}$) destiné au comparateur (36) du signal de référence est supérieur au signal de seuil ($U_{ref1}$) destiné au comparateur (6) du signal d'analyse, les comparateurs transmettant des impulsions de sortie lorsque le signaux lissés ou les enveloppes dépassent les signaux respectifs de seuil.

6. Appareil selon l'une quelconque des revendications 3 à 5, caractérisé en ce que le dispositif de comparaison comporte des basculeurs de type D (12, 14) aux entrées de données et d'horloge desquelles sont appliqués les trains d'impulsions correspondant au signal d'analyse et au signal de référence, et en ce que le dispositif d'enregistrement comporte des registres (16, 18) auxquels les basculeurs transmettent des signaux de sortie lors de l'apparition simultanée d'impulsions dans les trains appliqués d'impulsions, les registres étant destinés à déclencher un compteur d'enregistrement des signaux d'analyse et de référence comme étant en concordance lorsque les registres on reçu les signaux de sortie des basculeurs pendant un nombre prédéterminé de comparaisons consécutives.

7. Appareil selon l'une quelconque des revendications 4 à 6, caractérisé en ce que la bande passante du filtre passe-bande (4, 34) est comprise entre 0,5 et 10 Hz.

8. Appareil selon l'une quelconque des revendications 3 à 7, le signal d'analyse d'un récepteur de télévision étant destiné à être comparé à des signaux de référence provenant de plusieurs magnétoscopes, caractérisé en ce qu'une dérivation parallèle (8—10) comprenant un dispositif destiné à former un signal lissé ou enveloppe ainsi qu'un comparateur et un dispositif d'enregistrement, est disposée pour chaque signal de référence.

# Fig.1

Signal for analysis

Reference signal A

Reference signal B

scanning pulse

0 091 466

Fig. 2

$fg_1 = 0,5\,Hz$
$fg_2 = 10\,Hz$

$U_{Ref\,1}$

$U_{Ref\,2}$

0 091 466

2